# EUROPÄISCHE PATENTSCHRIFT

(11) **EP 2 935 974 B1**
(45) Veröffentlichungstag und Bekanntmachung des Hinweises auf die Patenterteilung: **06.09.2017**
(21) Anmeldenummer: 12810254.8
(22) Anmeldetag: 19.12.2012
(51) Int. Cl.: F16M 13/04

(54) **KETTENSCHLOSS FÜR GLIEDERKETTEN**
CHAIN JOINT FOR LINK CHAINS
JOINT DE CHAÎNE POUR CHAÎNES À MAILLON

(43) Veröffentlichungstag der Anmeldung: 28.10.2015
(73) Patentinhaber: PEWAG AUSTRIA GmbH, 8020 Graz (AT)
(72) Erfinder: PENGG, Ägyd, A-9020 Klagenfurt (AT); FUCHS, Franz, A-8605 Kapfenberg (AT)
(74) Vertreter: Patentanwälte Geyer, Fehners & Partner mbB
(86) Internationale Anmeldenummer: PCT/EP2012/076235
(87) Internationale Veröffentlichungsnummer: WO 2014/094848

(56) Entgegenhaltungen:
- WO-A1-2012/119613
- CA-A- 909 010
- DE-U1-202006 010 572
- JP-U- S51 145 456

## Beschreibung

Die Erfindung bezieht sich auf ein Kettenschloß für Gliederketten, mit einem Grundkörper in Form eines ovalen Kettengliedes, das zwei zueinander parallele, an ihren Enden jeweils über eine Gliedrundung miteinander verbundene geradlinige Längsschenkel mit entlang ihrer Erstreckung konstantem Profilquerschnitt aufweist, wobei ein Längsschenkel zur Ausbildung einer Aufnahmeöffnung zum Einhängen von ovalen Kettengliedern in eine Innenöffnung des Grundkörpers unterbrochen ist, die an ihren Enden von einem ersten und einem zweiten Längsschenkelabschnitt begrenzt wird, wobei in diesem Längsschenkel eine in seiner Längsrichtung verlaufende Gewindebohrung vorgesehen ist, die sich in dem ersten und den zweiten Längsschenkelabschnitt erstreckt, und mit einer Verschlußschraube, die zum Verschließen der Aufnahmeöffnung in die Gewindebohrung einschraubbar ist und im eingeschraubten Zustand mit der Gewindebohrung im ersten und im zweiten Längsschenkelabschnitt in Eingriff steht, wobei die Gewindebohrung an dem zweiten Längsschenkelabschnitt, an dem die Verschlußschraube in die Gewindebohrung eingeführt wird, von der Aufnahmeöffnung bis zum Bereich der Gliedrundung durchgängig vorgesehen ist, und wobei die Größe des Außenumfangs und der Gliedbreite des Grundkörpers vorgegeben sind.

Ein Kettenschloß der vorgenannten Art wird seit einiger Zeit im Markt angeboten. Der Grundkörper dieses bekannten Kettenschlosses ist in Form eines ovalen Kettengliedes ausgebildet, dessen einer Längsschenkel zur Ausbildung einer Aufnahmeöffnung unterbrochen ist, über die ovale Kettenglieder in eine Innenöffnung des Grundkörpers eingehängt werden können. Zum Verschließen der Aufnahmeöffnung ist in die beiden sich beidseits derselben befindlichen Längsschenkelabschnitte des Grundkörpers eine in Längsrichtung des Längsschenkels verlaufende Gewindebohrung eingebracht, die in jedem der beiden Längsschenkelabschnitte vorliegt und in die eine Verschlußschraube einschraubbar ist, die an einem der beiden Längsschenkelabschnitte in die Gewindebohrung eingesetzt, durch Verschrauben über die Aufnahmeöffnung geführt und sodann mit ihrem einschraubseitigen Endbereich in den Abschnitt der Gewindebohrung in den anderen Längsschenkelabschnitt eingeschraubt wird.

Ein solches Kettenschloß ist auch aus der CA 909 010 A und der JP S51 145 456 bekannt.

Bei solchen bekannten Kettenschlössern ist der Grundkörper umlaufend aus Rundstahl mit einem konstanten Querschnitt ausgeführt und wird relativ aufwendig aus Rundstahlkettengliedern hergestellt, wobei die als Rohteile für diese Grundkörper der Kettenschlösser dienenden Kettenglieder aus Endlosketten herausgeschnitten werden und die dabei zerschnittenen Kettenglieder Abfall sind sowie den Rohmaterialeinsatz erhöhen.

Ausgehend hiervon liegt der Erfindung die Aufgabe zugrunde, dieses bekannte Kettenschloß so zu verbessern, daß es unter Beibehaltung seiner vorgegebenen äußeren Maximal-Abmaße (nämlich Außenumfang und Gliedbreite des Grundkörpers) ein verbessertes Biegewiderstandsmoment und eine erhöhte Zugfestigkeit aufweist und dabei dennoch wegen seiner unveränderten äußeren Maximal-Abmaße an den gleichen Taschenkettenrädern wie das bekannte Kettenschloß voll lauffähig ist.

Erfindungsgemäß wird dies bei einem Kettenschloß der eingangs genannten Art dadurch erreicht, daß bei gleicher Gliedbreite der Profilquerschnitt des Grundkörpers im Bereich seiner Gliedrundungen kleiner ist als im Bereich seiner Längsschenkel, wobei der größere Profilquerschnitt an seiner der Innenöffnung des Grundkörpers zugewandten Seite eine rechtwinklig zur Aufspannebene des Grundkörpers verlaufende ebene Begrenzungsfläche für die Innenöffnung ausbildet, und daß die Gewindebohrung im ersten Längsschenkelabschnitt, ausgehend von der Aufnahmeöffnung, nur über einen vorgegebenen Längsbereich hinweg als Sackbohrung ausgebildet ist.

Infolge des bei der Erfindung eingesetzten Profilquerschnitts mit einer vergrößerten Querschnittsfläche an den Längsschenkeln wird schon dadurch ein größeres Biegewiderstandsmoment erreicht, wobei der vergrößerte Profilquerschnitt es auch möglich macht, eine Verbindungsschraube mit einem größeren Durchmesser als bei dem bekannten Kettenschloß zu verwenden. Dadurch wird auch die Zugfestigkeit des Kettenschlosses, bei unveränderten äußeren Abmaßen, deutlich verbessert, wobei trotz des vergrößerten Profilquerschnitts das Kettenschloß aufgrund seiner unveränderten äußeren Maximal-Abmaße über die gleichen Taschenkettenräder wie das bekannte Kettenschloß problemfrei geführt werden kann.

Dadurch, daß bei dem erfindungsgemäßen Kettenschloß jeder Längsschenkel an seiner der Innenöffnung des Grundkörpers zur Aufnahme der einzuhängenden Kettenglieder zugewandten Seite mit einer rechtwinkelig zur Aufspannebene des Grundkörpers verlaufenden ebenen Begrenzungsfläche für die Innenöffnung versehen ist, wird eine Ausgestaltung der Profilquerschnittsform an den Längsschenkeln des Grundkörpers im Hinblick auf das Erreichen einer möglichst großen Querschnittsfläche geschaffen.

Bei der Erfindung ist die Gewindebohrung im ersten Längsschenkelabschnitt, ausgehend von der Ausnahmeöffnung, nur über einen vorgegebenen Längsbereich hinweg als Sackbohrung ausgebildet. Dadurch wird beim Einschrauben der Verschlußschraube dann, wenn diese die Aufnahmeöffnung überdeckt hat, sichergestellt, daß sie anschließend nur noch über eine für ihre feste Aufnahme in beiden Längsschenkelabschnitten ausreichende Länge einschraubbar ist, ein zu tiefes Einschrauben jedoch vermieden wird.

Besonders bevorzugt wird der Grundkörper bei dem erfindungsgemäßen Kettenschloß als Feinguß- oder Sinterteil oder auch als Schmiedeteil hergestellt. Dies hat den Vorteil, daß damit veränderliche Querschnitte erzeugt werden können und auch die Ausbildung von Profilquerschnitten möglich ist, die durch Biegen nicht hergestellt werden können.

Dabei ist es weiterhin von Vorteil, wenn der Profilquerschnitt des Grundkörpers im Bereich der Mitte der Gliedrundungen eine zur Innenöffnung des Grundkörpers hin gerundet verlaufende Profilform aufweist, wodurch sich günstige Anlageverhältnisse beim Einhängen von Rundstahlkettengliedern ergeben.

Bei dem erfindungsgemäßen Kettenschloß kann die eingesetzte Verschlußschraube in jeder geeigneten Art und Weise ausgeführt werden. Besonders bevorzugt ist sie jedoch als eine Innensechskant-Schraube oder auch als ein Gewindebolzen ausgebildet.

Durch die Erfindung wird ein Kettenschloß geschaffen, das im Vergleich zu dem bekannten Kettenschloß, von dem ausgegangen wurde, ein größeres Biegewiderstandsmoment aufweist, wobei auch eine Verschlußschraube mit einem größeren Durchmesser als bei dem bekannten Kettenschloß eingesetzt werden kann. Zudem wird die Zugfestigkeit des erfindungsgemäßem Kettenschlosses bei unveränderten äußeren Maximalabmaßen deutlich verbessert, wobei es über die gleichen Taschenkettenräder wie das bekannte Kettenschloß voll lauffähig eingesetzt werden kann. Schließlich wird bei der Herstellung des erfindungsgemäßen Kettenschlosses der Rohteil für dessen Grundkörper nicht als ein aus einer Endloskette herausgeschnittenes Teil ausgebildet, so daß kein Abfall in Form von für seine Herauslösung zerschnittenen Kettengliedern anfällt und dadurch der Rohmaterialeinsatz geringer wird.

Die Erfindung wird nachfolgend anhand der Zeichnungen im Prinzip beispielshalber noch näher erläutert. Es zeigen:
- Fig. 1: eine Seitenansicht eines erfindungsgemäßen Kettenschlosses;
- Fig. 2: eine Querschnittsdarstellung des Kettenschlosses aus Fig. 1 entlang der Schnittlinie II-II in Fig. 1;
- Fig. 3: eine Querschnittsdarstellung des Kettenschlosses aus Fig. 1 längs Schnittlinie III-III in Fig. 1;
- Fig. 4: eine perspektivische Schrägdarstellung des Grundkörpers des erfindungsgemäßen Kettenschlosses aus Fig. 1, sowie
- Fig. 5: eine perspektivische Schrägdarstellung einer Verschlußschraube zum Einsatz bei dem erfindungsgemäßen Kettenschloß gemäß Fig. 1.

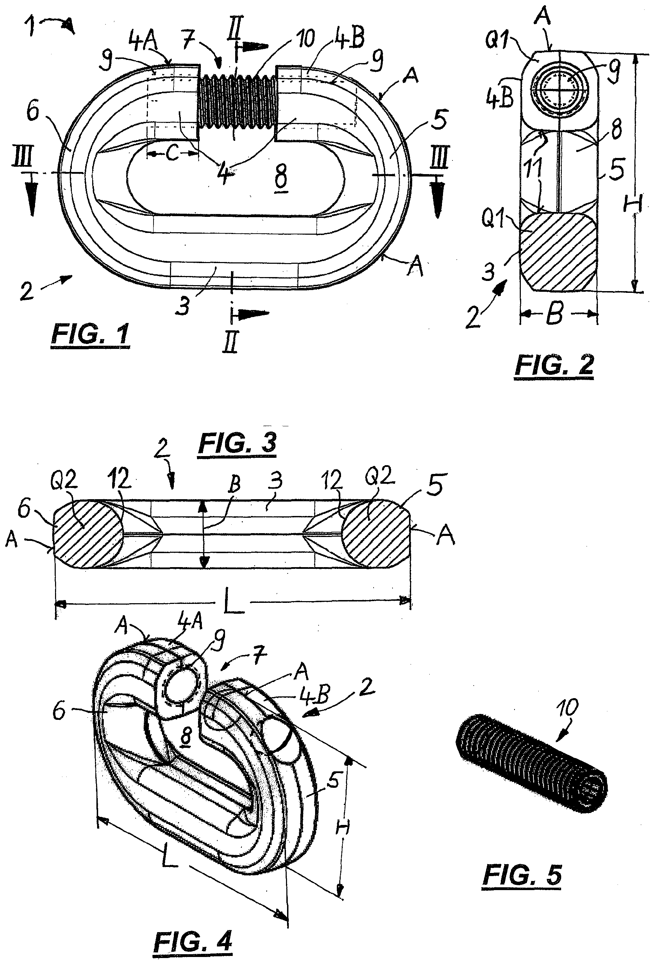

In Fig. 1 ist eine Seitenansicht eines Kettenschlosses 1 gezeigt, das einen Grundkörper 2 aufweist, der im wesentlichen in Form eines ovalen Kettengliedes ausgebildet ist, das zwei zueinander parallele Längsschenkel 3, 4 umfaßt, die an ihren Enden jeweils über eine Gliedrundung 5, 6 miteinander verbunden sind, wobei im gezeigten Ausführungsbeispiel die Gliedrundungen in der Seitenansicht halbkreisförmig ausgebildet sind.

In dem einen der beiden Längsschenkel, nämlich dem in Fig. 1 oben dargestellten Längsschenkel 4, ist mittig eine Aufnahmeöffnung 7 ausgebildet, die, wenn sie nicht verschlossen ist, das Einhängen ovaler Kettenglieder in eine vom Kettenschloß 1 bzw. dessen Grundkörper 2 umschlossene Innenöffnung 8 gestattet.

Die Aufnahmeöffnung 7 wird, wie aus Fig. 1 und insbesondere der eine perspektivische Schrägdarstellung des Grundkörpers 2 des Kettenschlosses 1 aus Fig. 1 darstellenden Fig. 4 entnehmbar, mittig am Längsschenkel 4 angebracht und in ihrer Längsrichtung an beiden Enden jeweils von einem ersten Längsschenkelabschnitt 4A bzw. einem zweiten Längsschenkelabschnitt 4B begrenzt.

In Längsrichtung dieses von der Aufnahmeöffnung 7 unterbrochenen Längsschenkels 4 des Grundkörpers 2 ist, und zwar mittig im Querschnittsprofil Q1 dieses Längsschenkels 4, eine Gewindebohrung 9 vorgesehen, die in Fig. 1 gestrichelt eingezeichnet ist.

Dabei ist die Gewindebohrung 9 derart angebracht, daß in sie von der Seite des einen der beiden Längsschenkelabschnitte 4A, 4B, im gezeigten Ausführungsbeispiel der Fig. 1 von der Seite des zweiten Längsschenkelabschnittes 4B her, eine Verschlußschraube 10, wie sie im Ausführungsbeispiel in Fig. 5 in perspektivischer Schrägansicht näher dargestellt ist, eingeschraubt werden kann.

Die Verschlußschraube 10 dient dem Zweck, daß mit ihr die Aufnahmeöffnung 7 verschlossen werden kann, wenn die Verschlußschraube 10 mit ihrem in Einschraubrichtung vorne liegenden Ende nach Überbrückung der Aufnahmeöffnung 7 in den Abschnitt der Gewindebohrung 9 eingeschraubt wird, der im ersten Längsschenkelabschnitt 4A ausgebildet ist und sich über eine Länge ***C*** erstreckt, wobei er dort als Sackbohrung ausgebildet ist. Auf diese Weise kann die Verschlußschraube 10 beim Einschrauben in den Teil der Gewindebohrung 9, der im ersten Längsschenkelabschnitt 4A vorliegt, nur über die Länge ***C*** eingeschraubt werden, wonach ein tieferes Einschrauben nicht mehr möglich ist.

Wie aus Fig. 5 ersichtlich, wird die Verschlußschraube 10 als ein über seine ganze Länge mit einem Außengewinde versehener Gewindebolzen ausgeführt, der an seinem dem einschraubseitigen Ende abgewandten Ende mit einem Innensechskant versehen ist.

Wird die Verschlußschraube 10 aus dem Längsschenkel 4 herausgeschraubt (oder zumindest so weit herausgeschraubt, bis die Aufnahmeöffnung 7 offen und von ihr nicht mehr überdeckt ist), können über die Aufnahmeöffnung 7 Kettenglieder mit einer Endrundung in die Innenöffnung 8 innerhalb des Kettenschlosses 1 eingehängt werden. Ist dies erfolgt, wird anschließend die Verschlußschraube 10 wieder in Einschraubrichtung verdreht, bis sie die Aufnahmeöffnung 7 vollständig überdeckt und in den im ersten Längsschenkelabschnitt 4A angebrachten Abschnitt der Gewindebohrung 9 eingeschraubt ist, bevorzugt über dessen gesamte axiale Erstreckung ***C*** hinweg.

Die Figuren 2 und 3 zeigen nun Schnittdarstellungen durch das Kettenschloß 1 aus Fig. 1, und zwar Fig. 2 entsprechend der Schnittlage II-II und Fig. 3 gemäß der Schnittlage III-III in Fig. 1:

Wie aus den Fig. 2 und 3 ersichtlich, weist der Grundkörper 2 des Kettenschlosses 1 über seine ganze Erstreckung hinweg eine gleich große Gliedbreite ***B*** auf.

Dabei ist der Profilquerschnitt Q1 der Längsschenkel 3, 4 (vgl. Fig. 2) größer, und zwar deutlich größer, als der Querschnitt Q2 ausgebildet, welcher den Profilquerschnitt des Profils des Grundkörpers 2 im mittleren Bereich seiner Profilrundungen 5, 6 darstellt.

Der Profilquerschnitt Q1 der Längsschenkel 3, 4 weist an seiner der Innenöffnung 8 des Kettenschlosses 1 zugewandten Innenseite eine rechtwinkelig zur Aufspannebene des Grundkörpers 2 verlaufende ebene Begrenzungsfläche 11 auf, während im Bereich der Profilrundungen 5, 6 der dortige Profilquerschnitt Q2 eine zur Innenöffnung 8 des Grundkörpers 2 hin gerundet verlaufende Profilform 12 hat, die im dargestellten Ausführungsbeispiel im Querschnitt halbkreisförmig ausgebildet ist.

Der nach der Innenseite des Kettenschlosses 1 hin abgerundet ausgebildete Profilquerschnitt Q2 entspricht in seiner Formgebung dem üblicher Rundstahlkettenglieder, die in ovaler oder runder Form durch Biegen hergestellt werden.

Demgegenüber weicht die Querschnittsform Q1 des Profils der Längsschenkel 3, 4 deutlich von dieser Querschnittsform üblicher Rundstahlkettenglieder ab, wobei die deutlich größere Querschnittsfläche des Profilquerschnitts Q1 an den Längsschenkeln 3, 4 gegenüber dem Profilquerschnitt Q2 in der Mitte der Gliedrundungen 5, 6 den Einsatz einer Verschlußschraube 10 mit einem größeren Gewindedurchmesser gestattet als in dem Fall, bei dem auch die Längsschenkel 3, 4 des Kettenschlosses 1 umlaufend mit einem Profilquerschnitt Q2, wie in Fig. 3 gezeigt, ausgebildet sind.

Durch die Verwendung eines vergrößerten Profilquerschnitts Q1 im Bereich der Längsschenkel 3, 4 wird gegenüber dem Fall einer Verwendung eines umlaufend gleichen kleineren Profilquerschnitts Q2, etwa entsprechend dem, wie er in Fig. 3 gezeigt ist, der Vorteil eines deutlich größeren Biegewiderstandsmomentes des Kettenschlosses 1 erreicht. Gleichzeitig wird auch die Zugfestigkeit des Kettenschlosses 1 erhöht, ohne daß der Außenumfang ***A*,** die Länge ***L*,** die Gliedhöhe ***H*** und die Gliedbreite ***B*** des Grundkörpers 2 gegenüber dem Fall der Verwendung eines durchgehend konstanten kleineren Profilquerschnitts Q2 verändert werden.

Infolge der Tatsache, daß trotz unterschiedlicher Größen der Profilquerschnitte Q1 an den Längsschenkeln 3, 4 und Q2 an den Gliedrundungen 5, 6 die maximalen Außenabmessungen des Kettenschlosses 1 (verglichen zum Fall eines umlaufend konstanten Profilquerschnitts Q2 in Form eines üblichen Rundstahlquerschnitts) nicht geändert werden, kann das in den Figuren dargestellte Kettenschloß 1 ohne Schwierigkeiten über die gleichen Taschenkettenräder wie das genannte andere, bekannte Profil geführt werden und ist dort voll lauffähig.

Bei dem gezeigten Kettenschloß 1 ist an den beiden Längsschenkeln 3, 4 innerhalb deren jeweils geradlinigem Erstreckungsbereich eine konstante Form und Größe des Profilquerschnitts Q1 vorgesehen. Allerdings könnte durchaus auch eine sich in diesen Bereichen verändernde Größe des Profilquerschnitts Q1 eingesetzt werden, wobei jedoch die Verwendung eines konstanten Profilquerschnitts Q1, der geeignet maximiert werden kann, natürlich vorteilhaft ist.

Die Herstellung des Grundkörpers 2 des in den Figuren darstellten Kettenschlosses 1 kann infolge der dabei eingesetzten unterschiedlich großen Profilquerschnitte Q1 und Q2 nicht mehr in Form eines Biegeteiles erfolgen. Ganz besonders bevorzugt wird deshalb der Grundkörper 2 als Schmiedeteil oder auch als Feinguß- oder Sinterteil hergestellt.

## Patentansprüche

1. Kettenschloß (1) für Gliederketten, mit einem Grundkörper (2) in Form eines ovalen Kettengliedes, das zwei zueinander parallele, an ihren Enden jeweils über eine Gliedrundung (5, 6) miteinander verbundene geradlinige Längsschenkel (3, 4) mit entlang ihrer Erstreckung konstantem Profilquerschnitt aufweist, wobei ein Längsschenkel (4) zur Ausbildung einer Aufnahmeöffnung (7) zum Einhängen von ovalen Kettengliedern in eine Innenöffnung (8) des Grundkörpers (2) unterbrochen ist, die an ihren Enden von einem ersten und einem zweiten Längsschenkelabschnitt (4A, 4B) begrenzt wird, wobei in diesem Längsschenkel (4) eine in seiner Längsrichtung verlaufende Gewindebohrung (9) vorgesehen ist, die sich in den ersten und den zweiten Längsschenkelabschnitt (4A, 4B) erstreckt, und mit einer Verschlußschraube (10), die zum Verschließen der Aufnahmeöffnung (7) in die Gewindebohrung (9) einschraubbar ist und im eingeschraubten Zustand mit der Gewindebohrung (9) im ersten und im zweiten Längsschenkelabschnitt (4A, 4B) in Eingriff steht, wobei die Gewindebohrung (9) an dem zweiten Längsschenkelabschnitt (4B), an dem die Verschlußschraube (10) in die Gewindebohrung (9) eingeführt wird, von der Aufnahmeöffnung (7) bis zum Bereich der Gliedrundung (6) durchgängig vorgesehen ist, und wobei die Größe des Außenumfangs (A) und der Gliedbreite (B) des Grundkörpers (2) vorgegeben sind, ***dadurch gekennzeichnet, daß*** bei gleicher Gliedbreite (B) der Profilquerschnitt (Q2) des Grundkörpers (2) im Bereich seiner Gliedrundungen (5, 6) kleiner ist als im Bereich seiner Längsschenkel (3, 4), wobei der größere Profilquerschnitt (Q1) an seiner der Innenöffnung (8) des Grundkörpers (2) zugewandten Seite eine rechtwinklig zur Aufspannebene des Grundkörpers (2) verlaufende ebene Begrenzungsfläche (11) für die Innenöffnung (8) ausbildet und daß die Gewindebohrung (9) im ersten Längsschenkelabschnitt (4A), ausgehend von der Aufnahmeöffnung (7), nur über einen vorgegebenen Längsbereich (C) hinweg als Sackbohrung ausgebildet ist.

2. Kettenschloß nach Anspruch 1, **dadurch gekennzeichnet, daß** der Grundkörper (2) durch Feinguß oder durch Sintern hergestellt ist.

3. Kettenschloß nach Anspruch 1, **dadurch gekennzeichnet, daß** der Grundkörper (2) als Schmiedeteil ausgebildet ist.

4. Kettenschloß nach einem der Ansprüche 1 bis 3, **dadurch gekennzeichnet, daß** der Profilquerschnitt (Q2) des Grundkörpers (2) im Bereich der Mitte der Gliedrundungen (5, 6) ein zur Innenöffnung (8) des Grundkörpers (2) hin gerundet verlaufende Profilform (12) aufweist.

5. Kettenschloß nach einem der Ansprüche 1 bis 4, **dadurch gekennzeichnet, daß** die Verschlußschraube (10) als Innensechskant-Schraube ausgebildet ist.

6. Kettenschloß nach einem der Ansprüche 1 bis 5, **dadurch gekennzeichnet, daß** die Verschlußschraube (10) als Gewindebolzen ausgebildet ist.

## Claims

1. Chain joint (1) for link chains, having a basic body (2) in the form of an oval chain link, comprising two straight longitudinal limbs (3, 4) parallel with and joined to each other at their respective ends via a link curvature (5, 6), said longitudinal limb having a constant profile cross-section along its extension,
wherein one longitudinal limb (4) is interrupted for the formation of a receiving opening (7) for hooking oval chain links into an inner opening (8) of the basic body (2), said inner opening being limited at its ends by a first and a second longitudinal limb portion (4A, 4B),
wherein a threaded hole (9) extending in its longitudinal direction is provided in this longitudinal limb (4), said threaded hole extending into the first and second longitudinal limb portions (4A, 4B), and having a screw plug (10) which can be screwed into the threaded hole (9) for closing the receiving opening (7) and which, in the screwed-in state, is in engagement with the threaded hole (9) in the first and second longitudinal limb portion (4A, 4B),
wherein the threaded hole (9) on the second longitudinal limb portion (4B), on which portion the screw plug (10) is inserted into said threaded hole (9), is provided continuously from the receiving opening (7) up to the region of the link curvature (6), and wherein the size of the outer circumference (A) and the link width (B) of the basic body (2) are specified,
***characterised in that,*** with identical member width (B), the profile cross-section (Q2) of the basic body (2) is smaller in the region of its link curvatures (5, 6) than in the region of its longitudinal limbs (3, 4),
wherein the larger profile cross-section (Q1), on its side directed towards the inner opening (8) of the basic body (2), forms a flat delimiting surface (11) for the inner opening (8), said delimiting surface extending at right angles to the clamping plane of the basic body (2),
and **characterised in that** the threaded hole (9) in the first longitudinal limb portion (4A), starting from the receiving opening (7), is designed only as a blind hole over a specified longitudinal region (C).

2. Chain joint according to claim 1, **characterised in that** the basic body (2) is produced by precision casting or by sintering.

3. Chain joint according to claim 1, **characterised in that** the basic body (2) is designed as a forging.

4. Chain joint according to one of claims 1 to 3, **characterised in that** the profile cross-section (Q2) of the basic body (2) has a profile shape (12) which is rounded towards the inner opening (8) of the basic body (2) in the region of the middle of the link curvatures (5, 6).

5. Chain joint according to one of claims 1 to 4, **characterised in that** the screw plug (10) is designed as a hexagon socket screw.

6. Chain joint according to one of claims 1 to 5, **characterised in that** the screw plug (10) is designed as a threaded bolt.

## Revendications

1. Joint de chaîne (1) pour chaînes à maillons, avec un corps de base (2) en forme de maillon de chaîne ovale qui présente deux branches longitudinales (3, 4) rectilignes parallèles entre elles, raccordées l'une à l'autre à leurs extrémités respectivement par le biais d'un arrondi de maillon (5, 6), avec une section transversale profilée constante le long de leur étendue, une branche longitudinale (4) étant interrompue pour la formation d'une ouverture réceptrice (7) qui est destinée à l'accrochage de maillons de chaîne ovales dans une ouverture intérieure (8) du corps de base (2) et qui est limitée à ses extrémités par un premier et un deuxième segment de branche longitudinale (4A, 4B), un perçage fileté (9) situé dans sa direction longitudinale étant prévu dans cette branche longitudinale (4) et s'étendant dans le premier et le deuxième segment de branche longitudinale (4A, 4B), et avec une vis de fermeture (10) qui peut être vissée dans le perçage fileté (9) pour la fermeture de l'ouverture réceptrice (7) et qui, dans l'état vissé, est en prise avec le perçage fileté (9) dans le premier et dans le deuxième segment de branche longitudinale (4A, 4B), le perçage fileté (9) étant prévu, de façon continue à partir de l'ouverture réceptrice (7) jusqu'à la zone de l'arrondi de maillon (6), sur la deuxième branche longitudinale (4B) sur laquelle la vis de fermeture (10) est introduite dans le perçage fileté (9), et la grandeur de la périphérie extérieure (A) et de la largeur de maillon (B) du corps de base (2) étant prédéfinie, **caractérisé en ce que,** pour une même largeur de maillon (B), la section transversale profilée (Q2) du corps de base (2) est plus petite dans la zone de ses arrondis de maillon (5, 6) que dans la zone de ses branches longitudinales (3, 4), la section transversale profilée (Q1) plus grande constituant, sur son côté tourné vers l'ouverture intérieure (8) du corps de base (2), une surface de délimitation (11) plane pour l'ouverture intérieure (8) qui est à angle droit par rapport au plan de serrage du corps de base (2), et **en ce que**, dans le premier segment de branche longitudinale (4A), le perçage fileté (9), en partant de l'ouverture réceptrice (7), est constitué en tant que trou borgne seulement sur une zone longitudinale (C) prédéfinie.

2. Joint de chaîne selon la revendication 1, **caractérisé en ce que** le corps de base (2) est fabriqué par coulée de précision ou par frittage.

3. Joint de chaîne selon la revendication 1, **caractérisé en ce que** le corps de base (2) est constitué en tant que pièce forgée.

4. Joint de chaîne selon l'une des revendications 1 à 3, **caractérisé en ce que** la section transversale profilée (Q2) du corps de base (2) présente, dans la zone du milieu des arrondis de maillon (5, 6), une forme profilée (12) arrondie vers l'ouverture intérieure (8) du corps de base (2).

5. Joint de chaîne selon l'une des revendications 1 à 4, **caractérisé en ce que** la vis de fermeture (10) est constituée en tant que vis à six pans creux.

6. Joint de chaîne selon l'une des revendications 1 à 5, **caractérisé en ce que** la vis de fermeture (10) est constitué en tant que boulon fileté.
